# EUROPEAN PATENT SPECIFICATION

(11) **EP 1 426 105 B1**
(45) Date of publication and mention of the grant of the patent: **04.03.2009**
(21) Application number: 03027355.1
(22) Date of filing: 27.11.2003
(51) Int. Cl.: B01J 20/04, B01J 20/28, B01D 53/28

(54) **Process for manufacturing a humidity absorber material**
Verfahren zur Herstellung von Feuchtigkeitsabsorptionsmaterial
Procédé de préparation d'un matériau absorbeur d'humidité

(30) Priority: 02.12.2002 FR 0215159
(43) Date of publication of application: 09.06.2004
(73) Proprietor: Henkel AG & Co. KGaA, 40589 Düsseldorf (DE)
(72) Inventor: Berger, Jacques, 27920 St. Pierre de Bailleul (FR); Boone, Guy, 40629 Düsseldorf (DE); Orlik, Sylvain, 27400 Surtauville (FR)

(56) References cited:
- EP-A- 0 400 460
- FR-A- 2 535 619
- US-A- 3 923 944

## Description

The present invention relates to a process for manufacturing a humidity absorbing material intended for use in a humidity absorbing device. Devices of this kind are known in which the humidity absorbing material comprises a hygroscopic agent that becomes liquid upon contact with water, making it possible to absorb humidity from the air and to transform it into brine. Such a material is normally in the form of granules and contains an irritating active substance, so that contact with the skin and the eyes must be avoided. The said granules are normally marketed in a permeable packaging requiring handling to place it in the humidity absorbing device. This handling may be unpleasant and tricky for the user, who has to take care to avoid all direct contact with the humidity absorbing material. Moreover, the packaging of the granules presents several drawbacks. Since the packaging is flexible, it causes crushing of the granules during transport or storage; such crushing is to be avoided as it reduces the material to powder, and this irritating powder could be inhaled by the user. Finally, there is a risk that the flexible packaging might be wrongly positioned in the humidity absorbing device, with parts of the packaging protruding beyond the receiving compartment in the device, which could lead to a risk of the brine leaking to the floor. From the patent document EP 0 793 060 the possibility is known of packaging the humidity absorbing granules in cassettes with relatively rigid walls. The cassettes are easy to handle, but they have a volume that is far greater than the useful volume of the granules and are relatively costly to manufacture.

Another drawback of the known devices containing granules of humidity absorbing material is the slowness of the conversion to the liquid state of the hygroscopic agent. The efficacy of such devices is in fact linked with the speed at which the first drop of brine forms: the shorter the formation time, the more effective the humidity absorbing material is.

From US-3 923 944 briquetting of Calcium chloride particulate is known.

One object of the present invention is to propose process for manufacturing a humidity absorbing material which eliminates the aforementioned drawbacks while being easier to use and more effective and with which a compact block having at least two layers can be obtained.

This object is achieved in accordance with the invention as defined in claim 1.Preferred embodiments are defined in Claims 2-9. In the present patent application, a block is considered to be a set of particles grouped in a compact manner, capable of being handled without disintegrating.

Such a form simplifies the placing of the said material in the humidity absorbing device. In addition, since the compactness of the block clearly limits the risk of powder being formed, it is possible to use any type of packaging. Finally, the volume occupied by the compact block is less that that occupied by the granules for the same quantity of material, which makes it possible to reduce the costs of storage.

Moreover, since the specific surface area of salt in contact with the air is less than that which would be obtained with non-agglomerated granules, the formation of the first drop of brine is accelerated. The applicant has thus been able to ascertain that the formation time could be divided by five compared with a cassette-type device enclosing granules.

Advantageously, the hygroscopic agent contained in the material comprises a salt of CaCl₂ or a salt of MgCl₂ in a proportion of at least 50% by mass. These two salts, used in the said proportion, perfectly absorb the water present in the ambient air. According to a preferred embodiment of the humidity absorbing material, the hygroscopic agent comprises, in a proportion of at least 50% by mass, a mixture of salts of CaCl₂ and MgCl₂. Such a mixture in effect offers the advantage of increasing, in the presence of water, the speed of formation of the first drop of brine, linked with liquefaction of the hygroscopic agent, compared to existing agents and in particular to a salt of CaCl₂. In fact, between a salt of CaCl₂ and a mixture of CaCl₂/MgCl₂ salts in a ratio of 80/20 by mass, the application was able to ascertain that the formation time of the first drop was halved.

Generally, the hygroscopic agent is not solely made up of the abovementioned salts; perfumes, colorants, antiallergens, mineral fillers like silica, calcium carbonate, and many other compounds may also form part of its composition, preferably in a proportion which, in total, is less than 50% by mass.

Advantageously, the at least two layers of said block can be of similar or different composition, even having similar or different colors.

Preferably, the said block can also incorporate a consumption indicator. This consumption indicator, which is released when the size of the block has diminished to a sufficient extent, drops into the brine and gives the user an indication of the state of consumption of the said block, allowing the user to make provision for its replacement. By way of an example, a part of this kind can be made from hygroscopic material or not and/or can be soluble in the brine, and in the latter case enclose a colorant which will cause coloration of the brine. Generally speaking, a piece of this kind can be fixed to the block by any known means, for example by adhesion, and/or be partially contained in the mass of the said block.

Advantageously, it is possible to wet the particles before applying the said mechanical loading. In the present of water, the surfaces of the particles of hydroscopic agent dissolve, the mechanical loading causes the particles to move closer together, following which recrystallization of the hydroscopic agent occurs at the interfaces of the said particles, which promotes their fusion and makes it possible to avoid using high mechanical loading. Preferably, the particles are wetted using a wetting agent, the proportion by mass of which is approximately equal to 30%. Generally, the wetting agent is water. It is, however, possible to use other types of wetting agents. According to a special mode of application of this process it is possible to use a mixture containing water and another solvent, for example an alcohol, which ensures better evaporation and accelerates the fusion of the particles to one another. The mechanical loading can also take different forms: pressure and/or vibration and/or centrifuging. It is even conceivable to use microwaves or ultrasound to ensure fusion of the said block. In addition, loading of this kind can be applied to the particles when they are contained in a mold, the resulting block then being knocked out from the mold.

The blocks formed by the processes mentioned often present a certain fragility at their edges. To solve this additional problem one can deposit a quantity of wetting agent in the bottom of the mold before introducing the particles and/or on the surface of the particles present in the mold before applying the said mechanical loading.

Preferably, the quantity of wetting agent used will have a mass approximately equal to 3% of the dry mass of the particles. Precautions of this kind make it possible to improve the compactness of the upper and/or lower surfaces of the block and to ensure that the corresponding edges are less brittle. To avoid fragility problems in the side edges of the said block, the block is preferably manufactured in cylindrical form.

To manufacture blocks formed of at least two layers, a first part of the block is made from a first quantity of particles, after which at least a second quantity of particles is arranged on the said first part of the block, and mechanical loading is applied to the whole comprising the first part of the block and the said second quantity of particles in such a manner as to obtain a block having at least two layers.

It is possible, by applying a process of this kind, to fix a consumption indicator to the block. Preferably, this consumption indicator can be placed on the first part of the block before arranging the second quantity of particles on the first part of the block; it will then be embedded in the mass of the block. It is also possible to place the consumption indicator on the "loose" particles before applying the mechanical loading, so that it forms a block with the particles.

Advantageously, the wetting agent used can contain binders and additives. The binders facilitate fusion of the salt particles to one another; the additives, for their part, can be diverse and include perfumes, colorants, antiallergens, mineral fillers, surfactants.

As explained in the foregoing, the use of a wetting agent makes it possible to dissolve the surface of the salt particles which, upon recrystallizing in a dry atmosphere, will assure fusion of the particles to one another.

Devices permitting the application of the processes for manufacturing the humidity absorbing material as described above, include according to one advantageous embodiment, at least one movable plunger, moving back and forth relative to a surface capable of supporting the particles, in such a manner as to apply the said mechanical loading, and/or a container with openings allowing evacuation of excess wetting agent.

The invention and its benefits will be better understood after perusal of the detailed description of a preferred embodiment of the invention.

A humidity absorber comprises a grid on which is arranged a compact block of humidity absorbing material, and a container suitable for collecting the brine. The latter results from the liquefaction of the hygroscopic agent contained in the compact block of humidity absorbing material. This block contains within its mass a consumption indicator. Following the liquefaction of part of the said compact block, the said consumption indicator is released and falls into the brine of the container, thus giving the user an indication of the state of consumption of the said block.

A manufacturing device comprises a mold capable of receiving the particles of the said material in the form of flakes, granules, powder or pearls, wetting agent sprays and a movable plunger moving back and forth relative to a surface suitable for supporting the particles, in this case the bottom of the mold. According to a preferred application of the manufacturing process a small quantity of wetting agent is sprayed onto the bottom of the mold before the introduction of the particles. These particles are then wetted with a greater quantity of wetting agent by means of the sprays. It will be noted that, in the chosen example, the means for wetting the particles and the means for placing the wetting agent in the mold are identical, which may not be the case if one chooses to wet the particles before their introduction into the mold. In a second stage in the manufacturing process, the plunger exerts a pressure of approximately 180 bars on the particles in order to form them into a compact block.

The manufacture of a block with multiple layers requires additional stages. A second quantity of particles is arranged on top of the first part of the block which has been produced. These particles can differ from those used to form the first layer, in color for example. The particles are then wetted using the sprays and a pressure of approximately 200 bars is applied by means of the plunger. This produces the second part of the block, fused to the first part of the block, the whole forming a compact block having two layers. All that is necessary to obtain a new layer is to repeat the third and fourth stages of the process, then to demold the multi-layer block thus produced. Demolding is facilitated when the bottom of the mold is movable.

## Claims

1. A process for manufacturing a humidity absorbing material intended for use in a humidity absorbing device, said material comprising a hygroscopic agent capable of absorbing humidity from the air and transforming it into brine in a form of a compact block by the furnishing of a multitude of particles containing a hygroscopic agent and the application of mechanical loading to said particles in order to form a compact block, **characterized in that** a first part of the block is produced from a first quantity of particles and the application of mechanical loading to said particles, at least a second quantity of particles is placed on said first part of the block, and mechanical loading is applied to the whole comprising the first part of the block and said second quantity of particles in order to obtain a compact block having at least two layers and **in that** a wetting agent is applied before each application of mechanical loading.

2. A process according to claim 1, **characterized in that** said particles are wetted before said mechanical loading is applied.

3. A process according to claim 1 or 2, **characterized in that** said particles are wetted in a proportion of wetting agent whose proportion by mass is approximately equal to 30%.

4. A process according to any of claims 1 to 3, **characterized in that** said mechanical loading is a pressure and/or vibrations and/or centrifuging.

5. A process according to any of claims 1 to 4, **characterized in that** said mechanical loading is applied to the particles when the latter are contained in a mold, following which the compact block thus obtained is demolded.

6. A process according to claim 5, **characterized in that** a quantity of wetting agent is deposited in the bottom of the mold before introducing the particles in this mold.

7. A process according to claims 5 to 6, **characterized in that** a quantity of wetting agent is deposited on the surface of the particles present in the mold before applying said mechanical loading.

8. A process according to claim 6 or 7, **characterized in that** said quantity of wetting agent has a mass approximately equal to 3% of the mass of the particles.

9. A process according to any of claims 1 to 8, **characterized in that** a consumption indicator is fixed to said compact block.

## Patentansprüche

1. Verfahren zur Herstellung eines Feuchtigkeitsabsorptionsmaterials, das zur Verwendung in einer Feuchtigkeitsabsorptionsvorrichtung bestimmt ist, wobei das Material ein hygroskopisches Mittel umfasst, das Feuchtigkeit aus der Luft absorbieren und sie in eine Salzlösung in der Form eines kompakten Blocks umwandeln kann, durch Zuführung einer großen Zahl Teilchen, die ein hygroskopisches Mittel enthalten, und Anwendung einer mechanischen Belastung auf die Teilchen, um einen kompakten Block zu bilden, **dadurch gekennzeichnet, dass** ein erster Teil des Blocks mittels einer ersten Menge Teilchen und der Anwendung der mechanischen Belastung auf die Teilchen produziert wird, mindestens eine zweite Menge Teilchen auf den ersten Teil des Blocks gegeben wird und eine mechanische Belastung auf die Gesamtheit, die den ersten Teil des Blocks und die zweite Menge Teilchen umfasst, angewendet wird, um einen kompakten Block mit mindestens zwei Schichten zu erhalten, und dass ein Benetzungsmittel vor jeder Anwendung einer mechanischen Belastung aufgebracht wird.

2. Verfahren nach Anspruch 1, **dadurch gekennzeichnet, dass** die Teilchen benetzt werden, bevor die mechanische Belastung angewendet wird.

3. Verfahren nach Anspruch 1 oder 2, **dadurch gekennzeichnet, dass** die Teilchen in einem Anteil Benetzungsmittel benetzt wird, dessen Massenanteil ungefähr 30 % entspricht.

4. Verfahren nach einem der Ansprüche 1 bis 3, **dadurch gekennzeichnet, dass** es sich bei der mechanischen Belastung um einen Druck und/oder Schwingungen und/oder Zentrifugierung handelt.

5. Verfahren nach einem der Ansprüche 1 bis 4, **dadurch gekennzeichnet, dass** die mechanische Belastung auf die Teilchen angewendet wird, wenn die letzteren in einer Form enthalten sind, woraufhin der so erhaltene kompakte Block aus der Form genommen wird.

6. Verfahren nach Anspruch 5, **dadurch gekennzeichnet, dass** eine Menge Benetzungsmittel im Boden der Form aufgetragen wird, bevor die Teilchen in diese Form eingeführt werden.

7. Verfahren nach Anspruch 5 oder 6, **dadurch gekennzeichnet, dass** eine Menge Benetzungsmittel auf die Oberfläche der in der Form vorliegenden Teilchen aufgetragen wird, bevor die mechanische Belastung angewendet wird.

8. Verfahren nach Anspruch 6 oder 7, **dadurch gekennzeichnet, dass** die Menge Benetzungsmittel eine Masse aufweist, die ungefähr 3 % der Masse der Teilchen entspricht.

9. Verfahren nach einem der Ansprüche 1 bis 8, **dadurch gekennzeichnet, dass** ein Verbrauchsanzeiger an dem kompakten Block angebracht wird.

## Revendications

1. Procédé pour la fabrication d'un matériau absorbant l'humidité destiné à l'utilisation dans un dispositif d'absorption d'humidité, ledit matériau comprenant un agent hygroscopique capable d'absorber l'humidité de l'air et de la transformer en saumure, sous la forme d'un bloc compact par l'apport d'une multitude de particules contenant un agent hygroscopique et l'application d'une charge mécanique aux dites particules dans le but de former un bloc compact, **caractérisé en ce qu'**une première partie du bloc est fabriquée à partir d'une première quantité de particules et l'application d'une charge mécanique aux dites particules, au moins une seconde quantité de particules est placée sur ladite première partie du bloc, et une charge mécanique est appliquée au tout, comprenant la première partie du bloc et ladite seconde quantité de particules, afin d'obtenir un bloc compact ayant au moins deux couches et **en ce qu'**un agent mouillant est appliqué avant chaque application de charge mécanique.

2. Procédé selon la revendication 1, **caractérisé en ce que** lesdites particules sont mouillées avant que ladite charge mécanique soit appliquée.

3. Procédé selon la revendication 1 ou 2, **caractérisé en ce que** lesdites particules sont mouillées dans une proportion d'agent mouillant dont la proportion en masse est approximativement égale à 30%.

4. Procédé selon l'une quelconque des revendications 1 à 3, **caractérisé en ce que** ladite charge mécanique est une pression et/ou des vibrations et/ou une centrifugation.

5. Procédé selon l'une quelconque des revendications 1 à 4, **caractérisé en ce que** la dite charge mécanique est appliquée aux particules lorsque ces dernières sont contenues dans un moule, après quoi le bloc compact ainsi obtenu est démoulé.

6. Procédé selon la revendication 5, **caractérisé en ce que** une quantité d'agent mouillant est déposée dans le fond du moule avant d'introduire les particules dans ce moule.

7. Procédé selon les revendications 5 ou 6, **caractérisé en ce que** une quantité d'agent mouillant est déposée sur la surface des particules présentes dans le moule avant d'appliquer ladite charge mécanique.

8. Procédé selon la revendication 6 ou 7, **caractérisé en ce que** ladite quantité d'agent mouillant présente une masse qui correspond approximativement à 3% de la masse des particules.

9. Procédé selon l'une quelconque des revendications 1 à 8, **caractérisé en ce qu'** un indicateur de consommation est fixé au dit bloc compact.
